# EUROPEAN PATENT SPECIFICATION

(11) **EP 0 684 754 B1**
(45) Date of publication and mention of the grant of the patent: **04.08.1999**
(21) Application number: 95104933.7
(22) Date of filing: 03.04.1995
(51) Int. Cl.: H05B 41/29, H02M 3/155

(54) **A power supply circuit, particularly for motor vehicles**
Versorgungsschaltung für Motorfahrzeuge
Circuit d'alimentation, en particulier pour véhicules

(30) Priority: 24.05.1994 IT TO940422
(43) Date of publication of application: 29.11.1995
(73) Proprietor: MAGNETI MARELLI S.p.A., 20145 Milano (IT)
(72) Inventor: Fratta, Antonino, I-10144 Torino (IT); Nepote, Andrea, I-10131 Torino (IT)
(74) Representative: Quinterno, Giuseppe

(56) References cited:
- EP-A- 0 534 422
- WO-A-93/12630
- US-A- 4 257 087

## Description

The present invention relates to a power supply circuit of the kind defined in the preamble of Claim 1.

EP-A-0 534 422 discloses a power supply circuit of this kind which, when coupled to an input d.c. voltage source, provides at its output an essentially constant d.c. voltage with a polarity reversed with respect to that of the input voltage source.

The primary object of the present invention is to provide a power supply circuit which will have a considerable circuit simplicity, which will allow the use of a smaller number of reactive components and in particular inductive components, and which will achieve their optimum exploitation.

This and other objects are achieved according to the invention by a power supply circuit of the above-specified type, having the features defined in Claim 1.

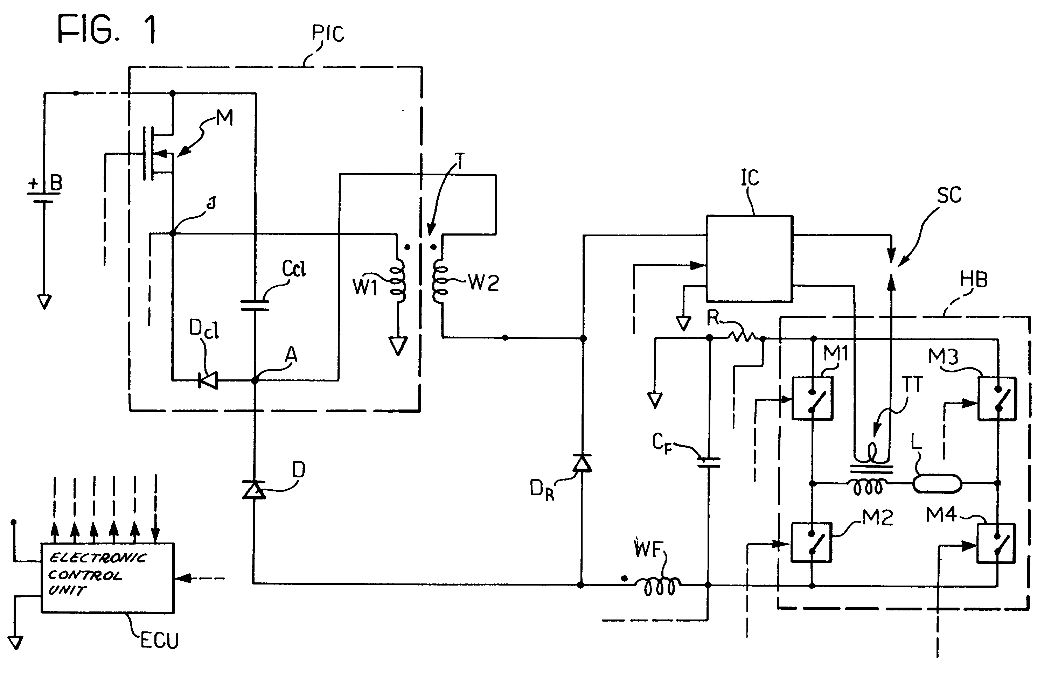

Further characteristics and advantages of the invention will become apparent from the following detailed description made with reference to the attached drawings provided purely by way of non-limitative example, in which Figures 1 to 4 are electrical diagrams of four embodiments of a circuit according to the invention, utilised for the supply of a gas discharge lamp.

In a first embodiment, shown in Figure 1, the circuit of the invention comprises a dc voltage source B represented for example by the battery on board a motor vehicle. This source has its negative pole connected to ground and its positive pole connected to the input of a polarity inverting circuit PIC of type known per se. This circuit includes a transistor M of MOSFET type having its drain connected to the source B and its source connected to a first terminal of a winding W1 the other terminal of which is connected to ground. To the drain of the MOSFET M is connected one plate of a capacitor C_{C1}, the other plate of which is connected to the anode of a diode D_{C1} the cathode of which is connected to the source M. The connection point A between the capacitor C_{C1} and the anode of the diode D_{C1} represents the output of the polarity inverting circuit PIC.

In a manner known per se, when the transistor M is conductive a current flows in the winding W1. If the transistor M is then switched off there is a flow of current through the winding W1, the capacitor C_{C1} and the clamp diode D_{C1}. By the effect of this current the capacitor C_{C1} is charged causing the potential at the point A to fall with respect to the ground potential.

A first terminal of a second winding W2 is connected to the point A; the winding W2 is coupled to the winding W1 of the polarity inverting circuit PIC in such a way as to form with it an air-gap transformer T. The other terminal of the winding W2 is connected to the cathode of a rectifier diode D_{R} the anode of which is connected to the point A via a rectifier and recirculation diode D.

The anode of the rectifier diode D_{R} is connected to a first terminal of an inductor W_{F} the other terminal of which is connected to a fixed potential point, for example to ground, via a capacitor C_{F}. The capacitor C_{F} could however be connected to the positive pole of the battery B rather than to ground.

The inductor W_{F} and the capacitor C_{F} form together a filter for smoothing the DC voltage which is applied to an H-shape bridge output circuit generally indicated HB. This bridge circuit is essentially connected in parallel to the capacitor C_{F}.

The bridge circuit HB comprises four switches M1 to M4 conveniently also constituted by MOSFET transistors.

The gas discharge lamp L and the secondary winding of a pulse transformer (Tesla transformer) TT are disposed in the central branch of this circuit HB. The primary winding of this transformer TT is connected, via a discharger SC, to a starter circuit IC which has an input connected to the cathode of the rectifier diode D_{R}.

The starter circuit IC can comprise, for example, a voltage surge circuit of known type, for example of the capacitor and diode type, to generate a voltage surge, and a switch to cause application of this voltage surge to the discharger SC and to a primary winding of the transformer TT.

The electronic control unit is indicated ECU and has a plurality of outputs connected to the control inputs or gates of the switches M, M1-M4, and a control input of the starter circuit IC. This unit also has input terminals, connected to the source s of the switch M, and to a resistor R connected in series to the bridge circuit HB. This resistor R allows the unit ECU to detect the magnitude of the current flowing the bridge circuit, and therefore in the lamp L.

The unit ECU, which can be made with the use of a micro processor, is arranged to control the switches M and M1-M4 in such a way as to control the starting and supply of the gas discharge lamp L in the following way.

In order to start the lamp L the unit ECU sends an on-off control signal to the gate of the switch M.

Commutation of this switch initially causes a progressive charging of the capacitor C_{C1} and a progressive increase in the potential difference across its terminals. In particular, when the switch M is "on" a current flows through the winding W1 towards ground, and this inductor accumulates energy. When the switch M is "off" there is a flow of current towards the capacitor C_{C1}, the diode D_{C1} and the winding W1, which yields energy to the capacitor C_{C1}. This latter charges and the potential difference between its plates increases such that the potential of the point A becomes ever lower, and still more negative with respective to ground potential.

After a rapid initial transitory phase the point A stabilises at a negative voltage value with respect to ground (over which, however, is superimposed a certain undulation or ripple).

In order to avoid breakdown of the switch M the electronic control unit ECU monitors the potential of the source s and drain d of the MOSFET M and reduces the duty cycle of the control signal applied to the gate of the MOSFET M when the voltage on the capacitor C_{C1} reaches a predetermined maximum value.

The winding W1 is magnetically coupled to the winding W2 (for example) in the manner indicated by the conventional dots illustrated in the drawing, forming a high voltage transformer. On the winding W2, which constitutes the secondary winding of the transformer T, there is therefore a voltage which is rectified by the diodes D_{R} and D and filtered via the inductor W_{F} and the capacitor C_{F}, and is then applied to the bridge circuit HB.

The starter circuit IC, which is connected to the output of the transformer T, acts to raise the voltage to a high voltage and when the control unit ECU provides a control signal to its input it applies a high voltage to the discharger SC and to the primary winding of the transformer TT. A very high voltage is correspondingly transferred to the secondary winding of the transformer TT, and causes ionisation of gas contained in the lamp L, which therefore becomes conductive.

The unit ECU controls the pairs of switches M1, M4 and M3, M2 respectively to conduct alternatively, and detects the magnitude of the current flowing in the lamp via the sensing resistor R. This, moreover, detects the voltage applied to the lamp by detecting for example the voltage across the terminals of the capacitor C_{F}.

On the basis of this information the unit can regulate the value of the voltage and current provided to the lamp L by modifying the duty cycle of the switch M.

The discharge lamp has the characteristic of presenting a very variable resistance both during the starting transient and with age. It correspondingly presents very variable "working points" in which , for substantially the same required power, it requires widely different supply voltages and currents.

The supply circuit according to the invention makes it possible to satisfy these variable requirements of voltage and current of the lamp in that its design characteristics depend substantially only on the power required by the load.

The core of the transformer T formed by the windings W1 and W2 can be dimensioned in a way which is substantially independent of the magnitude of the current which must be delivered to the lamp L. However, in order to make the necessary very high voltages available, in particular during the phase immediately after starting the flow of current in the lamp, the transformer T must have a rather high turns ratio.

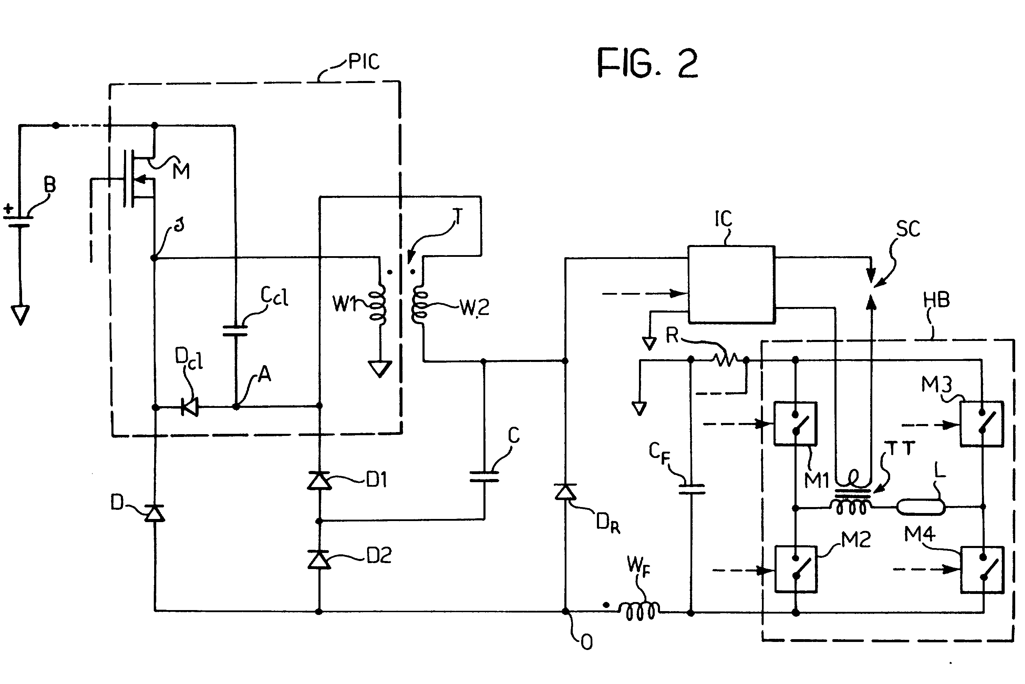

In Figure 2 is shown a variant embodiment which makes it possible to achieve the rather high voltages necessary, in particular after starting conduction in the lamp L, without requiring the transformer T to hake an excessively high turns ratio.

In the circuit of Figure 2 the components and elements described already have been given the same alphanumeric reference numerals and symbols.

With respect to the circuit of Figure 1, the circuit shown in Figure 2 differs essentially in the following aspects.

The recirculation diode D has its cathode connected to the cathode (rather than the anode) of the clamp diode D_{C1}. Moreover, between the point A and the anode of the rectifier diode D_{R} are disposed two diodes D1 and D2. Between the cathode of D_{R} and the connection point of the anode of D1 to the cathode of D2 is interposed a capacitor C.

The arrangement of D1, D2 and C is such that the capacitor C charges in operation (through the diode D1) each time the switch M passes to the "off" condition and discharges through the diode D2 towards the bridge circuit HB and therefore towards the lamp L in subsequent instants of this cycle (that is to say whilst the switch M is still turned off and during the immediately following conduction phase of this switch).

Because of the presence of the capacitor C and the associated diodes D1, D2, rather high peak voltages (and therefore also average voltages) are therefore present at point 0 of Figure 2. Without having to form the transformer T with an excessively high turns ratio, the desired high voltage values are achieved for application to the bridge circuit HB and therefore to the lamp L, in particular in the so-called "take-over" phase, that is to say in that phase immediately after the start of conduction in the lamp L, in which a voltage, which is much higher than that required in the operating conditions, must be applied thereto.

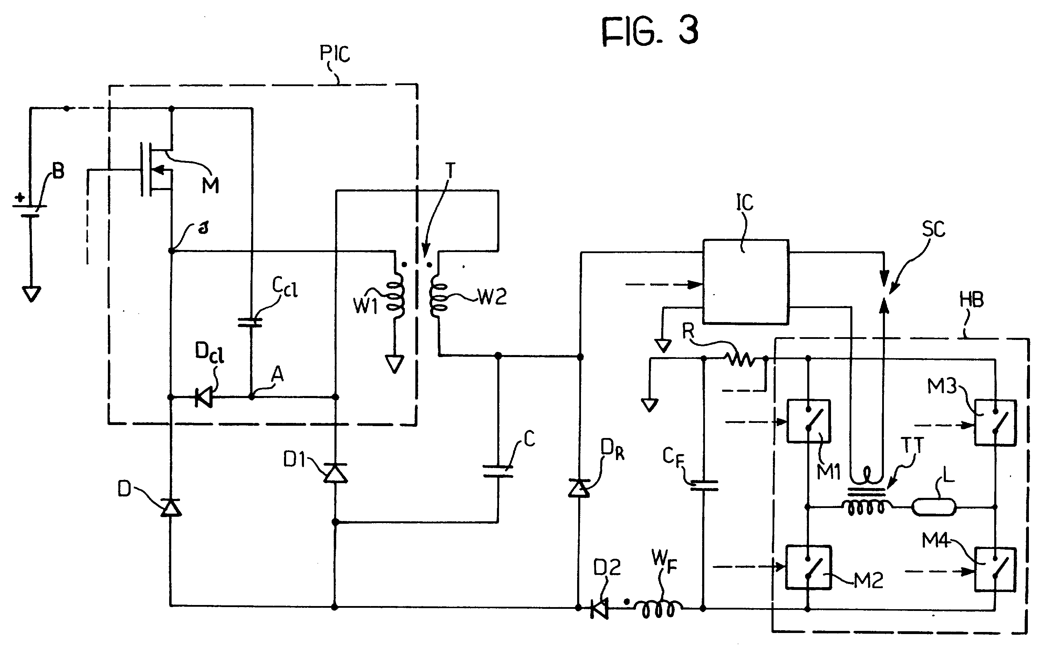

In Figure 3 is shown a variant embodiment of the circuit of Figure 2. This variant differs essentially by the different arrangement of the diode D2, which is here disposed in series with the inductor W_{F} of the filter, the anode of the diode D1 and the capacitor C being connected to the anode of the rectifier diode D_{R} and to the cathode of the diode D2.

The operation of the circuit of Figure 3 is similar to that of the circuit according to Figure 2 so that it will not be further described.

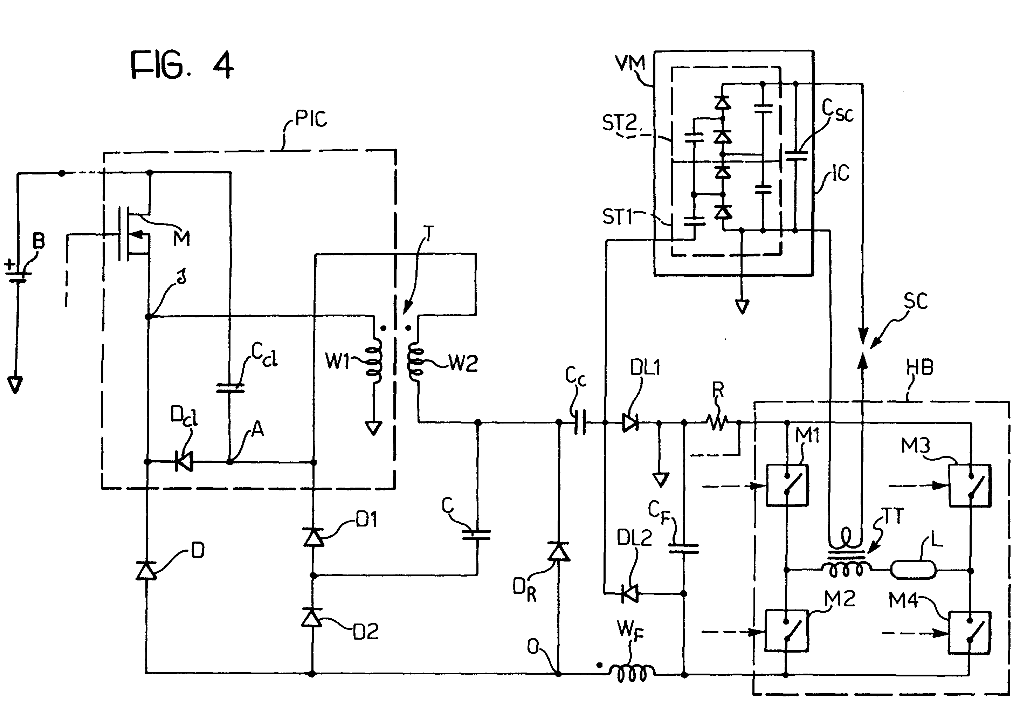

In Figure 4 is shown a further variant embodiment. In this Figure the same alphanumeric reference numerals utilised hereinbefore have been applied to the parts and components already described.

Figure 4 shows in particular an embodiment which is a variant of the circuit of Figure 2. Nevertheless the circuit modifications which appear in Figure 4 are also applicable to the circuits of Figures 1 and 3.

In the circuit of Figure 4 the starting voltage generator circuit IC comprises a voltage multiplier circuit VM of type known per se, including (by way of example) two diode and capacitor stages ST1 and ST2.

The input of this voltage multiplier VM is connected to the winding W2 by a coupling capacitor C_{C} of small capacity. At the output of the multiplier is connected a capacitor C_{SC} which is in parallel to the series formed by the discharger SC and the primary winding of the starting transformer TT.

In order to initiate conduction of current in the lamp L the voltage multiplier VM progressively recharges the capacitor C_{SC}, which, when it reaches the discharge voltage of the discharger SC, causes a pulse of current to pass through the primary winding of the transformer TT. The voltage surge correspondingly transferred to the secondary winding of the transformer TT causes conduction of current in the lamp L.

Once the flow of current is started in the lamp the capacitor C_{F} discharges through the bridge circuit HB and the voltage applied to the input of the multiplier VM falls so that the voltage on the capacitor C_{SC} no longer reaches the discharge threshold of SC.

The starter circuit IC of Figure 4 is of entirely passive type, that is to say that it does not require any active component such as an electronic switch to cause initiation of conduction in the lamp.

Conveniently, an amplitude limiter circuit can be connected to the input of the voltage multiplier VM, which in the example illustrated in Figure 4 comprises two diodes DL1 and DL2. The cathode of DL1 is connected to a fixed potential point (for example to ground as in Figure 4, or to the positive pole of the battery B) and the anode is connected to cathode of DL2 and to the input of VM. The anode of DL2 is connected to the lower side of the bridge HB.

However, the cathode of DL1 could advantageously be connected to the point A, that is to the output of the polarity inverting circuit PIC.

The limiter circuit formed by DL1 and DL2 connected as described above conveniently limits the amplitude of the voltage applied to the input of the multiplier VM to a value correlated to the output voltage applied to the bridge circuit HB and therefore lamp L.

## Claims

1. A power supply circuit particularly for motor vehicles, comprising a dc voltage source (B), a dc/dc converter (PIC, W2, D_{R}) connected to the said voltage source (B) and including at least one controlled switch (M), an output intended to be coupled to a dc load (HB; L); a control circuit (ECU) arranged to effect on/off control of the said controlled switch in a predetermined manner; the said dc/dc converter including a polarity inverting circuit (PIC) connected to the said voltage source (B) to provide at its output a dc voltage of opposite polarity from that of the said source (B); the said polarity inverting circuit (PIC) including a first winding (W1) connected to the said controlled switch (M);
the power supply circuit being characterised by
a second winding having a first terminal connected to the output (A) of the polarity inverting circuit (PIC) and a second terminal connected to the load (HB; L) via first rectifier means (D_{R}) connected between the load (HB; 1) and said second winding (W2) ; the said second winding (W2) being coupled to the said first winding (W1) of the polarity inverting circuit(PIC) in such a way as to form a transformer (T); and
second rectifier means (D, D1, D2) connected between the load (HB; L) and the output (A) of the polarity inverting circuit (PIC) ;
and in that the said windings (W1; W2) are mutually coupled in such a way that when said switch (M) is in conduction the voltage applied to the load (HB, L) by the second terminal of the second winding (W2) has a maximum magnitude corresponding to the added magnitudes of the output voltage of the polarity inverting circuit (PIC) and the voltage across said second winding (W2).

2. A circuit according to claim 1 characterised in that it further includes a capacitor (C) having a plate connected to the second terminal of the said second winding (W2) and associated control means (D1, D2) arranged to allow the said capacitor (C) to charge when the said electronic switch (M) is turned off, and which discharges in a subsequent moment of the same cycle of the control signal provided to the control input of the said electronic switch (M).

3. A power supply circuit according to one or more of the preceding claims, particularly for supplying a gas discharge lamp (L), characterised in that the said second winding (W2)is connected, via a rectifier means (D_{R}, D; D_{R}, D₁, D₂) to an H-bridge circuit (HB) in which the lamp (L) is connected.

4. A circuit according to claim 3, in which the lamp (L) is connected in series with the secondary winding of a starter transformer (TT) the primary winding of which is connected in series to a discharge device (SC) at the output of a starting voltage generator circuit (IC);
characterised by the fact that the said starting voltage generator circuit (IC) comprises a voltage multiplier (VM) the input of which is connected to the second terminal of the said second winding (W2) and the output of which is connected to a capacitor (C_{SC}) connected in parallel to discharge device (SC) and the primary winding of the starting transformer (TT), which are connected in series.

5. A circuit according to claim 4, characterised in that the second terminal of the said second winding (W2) is connected to a limiter circuit (DL1, DL2) operable to limit the voltage applied to the input of the voltage multiplier (VM) to a value correlated to the voltage applied to the said bridge circuit (HB).

## Patentansprüche

1. Stromversorgungskreis, insbesondere für Kraftfahrzeuge, umfassend eine Gleichspannungsquelle (B), einen mit der Spannungsquelle (B) verbundenen Gleichstrom/Gleichstrom-Wandler (PIC, W2, D_{R}), enthaltend zumindest einen gesteuerten Schalter (M), einen Ausgang zur Kopplung an eine Gleichstromladung (HB; L); eine zur Bewerkstelligung auf vorbestimmte Weise der Ein/Aus-Steuerung des gesteuerten Schalters angeordnete Steuerschaltung (ECU); wobei der Gleichstrom/Gleichstrom-Wandler eine mit der Spannungsquelle (B) verbundene Polaritätsumkehrschaltung (PIC) enthält, um an seinem Ausgang eine Gleichspannung von zu jener der Quelle (B) entgegengesetzter Polarität zu schaffen; und die Polaritätsumkehrschaltung (PIC) eine mit dem gesteuerten Schalter (M) verbundene erste Wicklung (W1) enthält;
welcher Stromversorgungskreis gekennzeichnet ist durch
eine zweite Wicklung mit einer mit dem Ausgang (A) der Polaritätsumkehrschaltung (PIC) verbundenen ersten Klemme und einer über die erste Gleichrichtereinrichtung (D_{R}), welche zwischen der Ladung (HB; 1) und der zweiten Wicklung (W2) angeschlossen ist, mit der Ladung (HB; L) verbundenen zweiten Klemme; welche zweite Wicklung (W2) derart an die erste Wicklung (W1) der Polaritätsumkehrschaltung (PIC) gekoppelt ist, daß ein Transformator (T) gebildet wird; und
eine zwischen der Ladung (HB; L) und dem Ausgang (A) der Polaritätsumkehrschaltung (PIC) geschaltete zweite Gleichrichtereinrichtung (D, D1, D2);
und dadurch, daß die Wicklungen (W1; W2) derart aneinander gekoppelt sind, daß, wenn sich der Schalter (M) in Leitung befindet, die durch die zweite Klemme der zweiten Wicklung (W2) in die Ladung (HB, L) gespeiste Spannung eine maximale Stärke aufweist, welche der Summe der Stärken der Ausgangsspannung der Polaritätsumkehrschaltung (PIC) und der Spannung quer durch die zweite Wicklung (W2) entspricht.

2. Schaltung nach Anspruch 1, dadurch gekennzeichnet, daß sie weiters einen Kondensator (C) mit einer mit der zweiten Klemme der zweiten Wicklung (W2) verbundenen Platte und eine zugeordnete Steuereinrichtung (D1, D2) enthält, die angeordnet ist, um die Aufladung des Kondensators (C) zu ermöglichen, wenn der elektronische Schalter (M) ausgeschaltet ist, und welcher sich zu einem darauffolgenden Zeitpunkt desselben Zyklus des Steuersignals, welches an den Steuereingang des elektronischen Schalters (M) gesendet wird, entlädt.

3. Stromversorgungskreis nach einem oder mehreren der vorhergehenden Ansprüche, insbesondere zur Versorgung einer Gasentladungslampe (L), dadurch gekennzeichnet, daß die zweite Wicklung (W2) über eine Gleichrichtereinrichtung (D_{R}, D; D_{R}, D₁, D₂) mit einer H-Brückenschaltung (HB), in welcher die Lampe (L) geschaltet ist, verbunden ist.

4. Schaltung nach Anspruch 3, worin die Lampe (L) mit der Sekundärwicklung eines Startertransformators (TT) in Serie geschaltet ist, dessen Primärwicklung am Ausgang eines Anlaßspannungsgeneratorkreises (IC) mit einer Entladungseinrichtung (SC) in Serie geschaltet ist;
dadurch gekennzeichnet, daß der Anlaßspannungsgeneratorkreis (IC) einen Spannungsverstärker (VM) umfaßt, dessen Eingang mit der zweiten Klemme der zweiten Wicklung (W2) und dessen Ausgang mit einem Kondensator (C_{SC}) verbunden ist, welcher mit der Entladungseinrichtung (SC) und der Primärwicklung des Startertransformators (TT), welche in Serie geschaltet sind, parallelgeschaltet ist.

5. Schaltung nach Anspruch 4, dadurch gekennzeichnet, daß die zweite Klemme der zweiten Wicklung (W2) mit einem Begrenzer (DL1, DL2) verbunden ist, welcher zur Begrenzung der an den Eingang des Spannungsverstärkers (VM) angelegten Spannung auf einen mit der an die Brückenschaltung (HB) angelegten Spannung abgestimmten Wert betätigbar ist.

## Revendications

1. Circuit d'alimentation, en particulier pour des véhicules à moteur, comprenant une source de tension en courant continu (B), un convertisseur courant continu/courant continu (PIC, W2, DR) connecté à ladite source de tension (B) et comprenant au moins un commutateur commandé (M), une sortie destinée à être couplée à une charge en courant continu (HB, L) ; un circuit de commande (ECU) agencé pour exécuter une commande marche/arrêt dudit commutateur commandé d'une manière prédéterminée ; ledit convertisseur courant continu/courant continu comprenant un circuit d'inversion de polarité (PIC) connecté à ladite source de tension (B) pour fournir à sa sortie une tension en courant continu de polarité opposée à celle de ladite source (B) ; ledit circuit d'inversion de polarité (PIC) comprenant un premier enroulement (W1) connecté audit commutateur commandé (M);
le circuit d'alimentation étant caractérisé par
un deuxième enroulement ayant une première borne connectée à la sortie (A) du circuit d'inversion de polarité (PIC) et une deuxième borne connectée à la charge (HB; L) via des premiers moyens formant redresseur (DR) connectés entre la charge (HB; L) et ledit deuxième enroulement (W2) ; ledit deuxième enroulement (W2) étant couplé auxdits premier enroulement (W1) du circuit d'inversion de polarité (PIC) de manière à constituer un transformateur (T) ; et
des deuxièmes moyens formant redresseur (D, D1, D2) connectés entre la charge (HB; L) et la sortie (A) du circuit d'inversion de polarité (PIC) ;
et en ce que lesdits enroulements (W1; W2) sont couplés mutuellement d'une manière telle que lorsque ledit commutateur (M) est en conduction, la tension appliquée à la charge (HB; L) par la deuxième borne du deuxième enroulement (W2) a une amplitude maximale correspondant aux amplitudes additionnées de la tension de sortie du circuit d'inversion de polarité (PIC) et de la tension aux bornes dudit deuxième enroulement (W2).

2. Circuit selon la revendication 1, caractérisé en ce qu'il comprend en outre un condensateur (C) ayant une plaque connectée à la deuxième borne dudit deuxième enroulement (W2) et des moyens de commande associés (D1, D2) agencés de façon à permettre audit condensateur (C) de se charger lorsque ledit commutateur électronique (M) est désactivé et qui se décharge à un moment subséquent du même cycle du signal de commande fourni à l'entrée de commande dudit commutateur électronique (M).

3. Circuit d'alimentation selon une ou plusieurs des revendications précédentes, en particulier pour alimenter une lampe à décharge de gaz (L), caractérisé en ce que ledit deuxième enroulement (W2) est connecté, par l'intermédiaire de moyens formant redresseur (DR, D; DR, D1, D2) à un circuit en pont en H (HB) dans lequel la lampe (L) est connectée.

4. Circuit selon la revendication 3, dans lequel la lampe (L) est connectée en série avec l'enroulement secondaire d'un transformateur de démarrage (TT) dont l'enroulement primaire est connecté en série avec un dispositif de décharge (SC) à la sortie d'un circuit générateur de tension de démarrage (IC) ;
caractérisé par le fait que ledit circuit générateur de tension de démarrage (IC) comprend un multiplieur de tension (VM) dont l'entrée est connectée à la deuxième borne dudit deuxième enroulement (W2) et dont la sortie est connectée à un condensateur (CSC) qui est connecté en parallèle avec le dispositif de décharge (SC) et l'enroulement primaire du transformateur de démarrage (TT), qui sont connectés en série.

5. Circuit selon la revendication 4, caractérisé en ce que la deuxième borne dudit deuxième enroulement (W2) est connectée à un circuit limiteur (DL1, DL2) pouvant agir pour limiter la tension appliquée à l'entrée du multiplieur de tension (VM) à une valeur corrélée avec la tension appliquée audit circuit en pont (HB).
